# EUROPEAN PATENT SPECIFICATION

(11) **EP 4 386 970 B1**
(45) Date of publication and mention of the grant of the patent: **18.11.2026**
(21) Application number: 21969632.5
(22) Date of filing: 30.12.2021
(51) Int. Cl.: H01M 50/552, H01M 50/538, H01M 50/536, H01M 10/04, H01M 10/0587, H01M 50/533

(54) **ELECTRODE PLATE, ELECTRODE ASSEMBLY, BATTERY, ELECTRIC DEVICE, AND MANUFACTURING METHOD FOR ELECTRODE PLATE**
ELEKTRODENPLATTE, ELEKTRODENANORDNUNG, BATTERIE, ELEKRISCHE VORRICHTUNG UND HERSTELLUNGSVERFAHREN EINER ELEKTRODENPLATTE
PLAQUE D'ÉLECTRODE, ENSEMBLE D'ÉLECTRODES, BATTERIE, DISPOSITIF ÉLECTRIQUE ET PROCÉDÉ DE FABRICATION DE PLAQUE D'ÉLECTRODE

(43) Date of publication of application: 19.06.2024
(73) Proprietor: Contemporary Amperex Technology (Hong Kong) Limited, Central, Central And Western District (HK)
(72) Inventor: XU, Hu, Ningde, Fujian 352100 (CN); HUANG, Siying, Ningde, Fujian 352100 (CN); DONG, Jiao, Ningde, Fujian 352100 (CN); LI, Xing, Ningde, Fujian 352100 (CN); NIU, Shaojun, Ningde, Fujian 352100 (CN)
(74) Representative: Lorenz Seidler Gossel Part. mbB
(86) International application number: PCT/CN2021/143333
(87) International publication number: WO 2023/123274

(56) References cited:
- WO-A1-2021/192664
- CN-A- 102 437 306
- CN-A- 102 437 306
- CN-A- 112 103 455
- CN-U- 204 793 089
- CN-U- 204 946 992
- CN-U- 207 765 532
- JP-A- 2014 123 454
- US-A1- 2012 237 811

## Description

### TECHNICAL FIELD

The present disclosure relates to the technical field of an energy storage device, and in particular, to an electrode plate, an electrode assembly, a battery, an electric device, and a manufacturing method for an electrode plate.

### BACKGROUND

Energy conservation and emission reduction are the key to sustainable development of the automobile industry. In this case, an electric vehicle has become an important part of the sustainable development of the automobile industry due to its advantages of energy conservation and environmental protection. For the electric vehicle, a battery technology is another important factor related to its development. During battery production, it is important to increase a product yield rate, reduce production costs, and improve production efficiency.

Document US2012/237811 A1 discloses a lithium ion battery, which includes an anode plate and a cathode plate spirally coiled with a separator set between the anode plate and the cathode plate.

Document CN 102 437 306 A discloses a pole piece of a secondary battery according to the preamble of claim 1, a manufacturing method for pole piece of a secondary battery and a secondary battery using a pole piece.

Document CN 112 103 455 A discloses a tab structure, an application of a tab structure, a preparation method and a preparation device of tab structure.

### SUMMARY

To resolve the foregoing problem, the present disclosure provides an electrode plate, an electrode assembly, a battery, an electric device, and a manufacturing method for an electrode plate, which can increase a product yield rate, reduce production costs, and improve production efficiency during battery production.

A first aspect of embodiments of the present disclosure provides an electrode plate according to claim 1 and a manufacturing method thereof according to claim 14. Dependent claims define further advantageous embodiments.

It should be understood that the foregoing general description and the following detailed description are merely exemplary

### BRIEF DESCRIPTION OF THE DRAWINGS

To describe technical solutions in embodiments of the present disclosure more clearly, the following briefly describes the accompanying drawings required for describing the embodiments of the present disclosure. Clearly, the accompanying drawings in the following description show merely specific embodiments of the present disclosure, and a person of ordinary skill in the art may still derive other embodiments from these accompanying drawings without creative efforts.
FIG. 1 is a schematic diagram of a structure of a vehicle according to some embodiments of the present disclosure;
FIG. 2 is a schematic diagram of a structure of a battery according to some embodiments of the present disclosure;
FIG. 3 is an exploded diagram of the battery in FIG. 2;
FIG. 4 is a schematic diagram of a structure of a battery cell according to some embodiments of the present disclosure;
FIG. 5 is an exploded diagram of the battery cell in FIG. 4;
FIG. 6 is a schematic diagram of a structure of an electrode assembly according to some embodiments of the present disclosure;
FIG. 7 is a partially sectional view of an electrode assembly;
FIG. 8 is an unfolded diagram of the electrode plate in FIG. 7;
FIG. 9 is an enlarged view of I in FIG. 8;
FIG. 10 is a partially enlarged diagram of an electrode plate according to some other embodiments of the present disclosure;
FIG. 11 is a schematic diagram of an electrode plate according to some other embodiments of the present disclosure;
FIG. 12 is an enlarged view of II in FIG. 11;
FIG. 13 is a partially enlarged diagram of an electrode plate according to still some other embodiments of the present disclosure;
FIG. 14 is a schematic diagram of an electrode plate according to some other embodiments of the present disclosure;
FIG. 15 is a schematic diagram of calculating a spacing between two of tabs according to some embodiments of the present disclosure;
FIG. 16 is an enlarged view of III in FIG. 14;
FIG. 17 is a partially unfolded diagram of an electrode assembly according to some embodiments of the present disclosure;
FIG. 18 is a partially unfolded diagram of an electrode assembly according to some other embodiments of the present disclosure;
FIG. 19 is a schematic diagram of an electrode assembly according to still some other embodiments of the present disclosure; and
FIG. 20 is a flowchart of a manufacturing method for an electrode plate according to an embodiment of the present disclosure.

### Reference numerals:

1 - vehicle; 2 - battery; 3 - controller; 4 - motor;
10 - case; 11 - case body; 12. first cover body; 13. second cover body;
20 - battery cell; 200 - battery module; 30 - bus part;
21 - end cap; 22 - electrode assembly; 23 - shell; 231 - opening;
25 - main body part;
26 - electrode plate; 26a - first electrode plate; 26b - second electrode plate;
260 - shaping region; 261 - coating region; 262 - tab; 262a - first tab; 262b - second tab;
2621 - first part; 26211 - first side cut; 26212 - second side cut;
2622 - second part; 26221 - third side cut; 26222 - fourth side cut; 26223- corner cutting edge;
26224 - sharp corner;
263 - second coating region; 264 - head end; 265 - tail end;
27 - separator.

The accompanying drawings herein are incorporated into the specification and constitute a part of the specification, illustrate embodiments that conform to the present disclosure, and are used together with the specification to describe the principles of the present disclosure.

### DETAILED DESCRIPTION OF THE EMBODIMENTS

To better understand technical solutions of the present disclosure, the following describes embodiments of the present disclosure in detail with reference to the accompanying drawings.

It should be noted that the described embodiments are merely some, but not all, embodiments of the present disclosure.

Terms in the embodiments of the present disclosure are merely used to describe the specific embodiments, and are not intended to limit the present disclosure. Unless otherwise specified in the context, words, such as "a", "the", and "this", in a singular form in the embodiments and appended claims of the present disclosure include plural forms.

It should be understood that the term "and/or" in this specification merely describes associations between associated objects, and it indicates three types of relationships. For example, A and/or B may indicate that A exists alone, A and B coexist, or B exists alone. In addition, the character "/" in this specification generally indicates that the associated objects are in an "or" relationship.

It should be noted that nouns of locality such as "upper", "lower", "left", and "right" described in the embodiments of the present disclosure are described from perspectives shown in the accompanying drawings, and should not be construed as a limitation on the embodiments of the present disclosure. In addition, in the context, it should be further understood that when one element is connected "above" or "below" another element, the element can be directly connected "above" or "below" another element, or may be indirectly connected "above" or "below" another element by using an intermediate element.

At present, with the development of the market, a power battery is widely used. The power battery is not only applied to a power storage system such as a hydraulic power, a fire power, a wind power, and a solar power plant, but also widely used in electric transportation, such as an electric bicycle, an electric motorcycle, and an electric vehicle, and various fields, such as military equipment, and aerospace. As the power battery application field continues to expand, the market demand for the power battery is constantly increasing.

In the field of electric carriers such as electric vehicles, the power battery serves as a core component of a vehicle, and is related to safety when a vehicle is used, and costs of the vehicle. How to reduce manufacturing costs of the power battery and improve production efficiency are important indexes of the power battery.

The battery mentioned in the embodiments of the present disclosure refers to a single physical module that includes one or more battery cells to provide a higher voltage and capacity. For example, the battery mentioned in the present disclosure can include a battery module, a battery pack, and the like. The battery generally includes a case for encapsulating one or more battery cells. The case can prevent liquid or other foreign matter from affecting charging or discharging of the battery cell.

Currently, a battery cell generally includes a shell, an electrode assembly, and an end cap assembly, where the electrode assembly is electrically connected to the end cap assembly, the end cap assembly covers an opening of the shell, and the shell and the end cap assembly are usually connected and fixed by welding, so as to provide an enclosed space for the electrode assembly and an electrolyte.

The electrode assembly includes a positive electrode plate, a negative electrode plate, and a separator. The battery cell works mainly depending on metal ions to move between the positive electrode plate and the negative electrode plate. The positive electrode plate includes a cathode current collector and a cathode active material layer, a surface of the cathode current collector is coated with the cathode active material layer, a cathode current collector that is not coated with the cathode active material layer protrudes from a cathode current collector coated with the cathode active material layer, and the cathode current collector that is not coated with the cathode active material layer is used as a cathode tab. A surface of an anode current collector is coated with an anode active material layer, an anode current collector that is not coated with the anode active material layer protrudes from an anode current collector coated with the anode active material layer, and the anode current collector that is not coated with the anode active material layer is used as an anode tab.

The electrode assembly can be a winding structure, and a winding electrode assembly is formed by winding a positive electrode plate, a negative electrode plate, and a separator between the positive electrode plate and the negative electrode plate together. The winding electrode assembly may be in a cylindrical structure, or may be in a square or an oval structure. This is not specifically limited in the present disclosure.

A tab of the winding electrode assembly may be in a full-tab structure, or may be in a tab cutting structure. After the electrode assembly is wound, the tab needs to be rubbed and unfolded to make the tab flat and compact. The full-tab structure is formed by current collectors that are not coated with active materials of the positive electrode plate and the negative electrode plate. When the full-tab structure is rubbed and unfolded, because end faces of an entire electrode assembly are in a tab structure, after rubbing and flattening, the end faces of the tab are too dense to inject an electrolyte. Therefore, when the positive electrode plate and the negative electrode plate are manufactured, current collectors that are not coated with the active materials of the positive electrode plate and the negative electrode plate are die cut to form a plurality of tabs, and the tabs form a tab structure. Because the tabs are distributed at intervals, when the tab structure is rubbed and unfolded, end faces of the tab are not too dense, which facilitates injecting an electrolyte.

The inventor found that, because of a die-cut structure of the tab, when the end faces of the tab are rubbed and unfolded, a force exerted by rubbing and flattening the end faces of the tab may cause a root of the tab to crack in a rubbing and flattening process, thereby causing a defect in a product, reducing a product yield rate, and reducing production efficiency.

To resolve a problem that a tab is easy to crack in a rubbing and flattening process, the present disclosure provides an electrode assembly to enhance strength of a root of the tab by designing a tab die cut shape, reduce a cracking risk of the root of the tab, and improve a product yield rate and production efficiency. The following describes solutions of the embodiments of the present disclosure in detail.

The battery cell described in the embodiments of the present disclosure is applicable to a battery and a device using a battery.

The electric device may be a mobile phone, a portable device, a laptop, an electric motorcycle, an electric vehicle, a steamship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like. For example, the spacecraft includes an airplane, a rocket, a space shuttle, and a spaceship; the electric toy includes a stationary or mobile electric toy, such as a game console, an electric toy car, an electric toy ship, and an electric toy plane; and the electric tool includes a metal cutting electric tool, a grinding electric tool, an assembly electric tool, and a railway electric tool, such as an electric drill, an electric grinding machine, an electric wrench, an electric screwdriver, an electric hammer, an electric impact drill, a concrete vibrator, and an electric planer. The embodiments of the present disclosure set no special limitation on the foregoing electric device.

For ease of description, that the device using a battery is a vehicle is used as an example for description in the following embodiments.

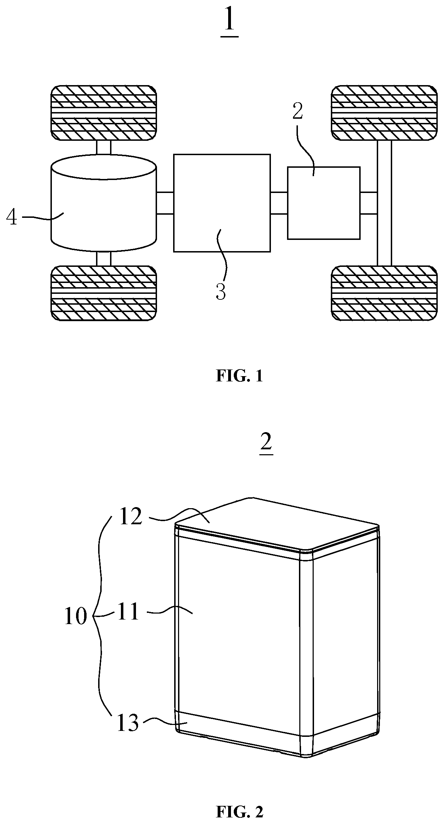

FIG. 1 is a schematic diagram of a structure of a vehicle 1 according to some embodiments of the present disclosure.

As shown in FIG. 1, a battery 2 is disposed in the vehicle 1. The battery 2 refers to a single physical module that includes one or more battery cells to provide a higher voltage and capacity. For example, the battery 2 mentioned in the present disclosure can include a battery module, a battery pack, or the like. The battery 2 can be disposed at a bottom, a head, or a tail of the vehicle 1. The battery 2 can be configured to supply power to the vehicle 1. For example, the battery 2 may be used as an operational power source of the vehicle 1. The vehicle 1 can further include a controller 3 and a motor 4. The controller 3 is configured to control the battery 2 to supply power to the motor 4, for example, is configured to enable, navigate, and drive the vehicle 1.

In some embodiments of the present disclosure, the battery 2 can be used not only as the operational power source of the vehicle 1, but also as a driving power source of the vehicle 1, in place of or partly in place of fuel or natural gas to provide a driving power for the vehicle 1.

For ease of description, the embodiments of the present disclosure are described in detail by using an example in which a battery cell is a cylindrical battery cell in the following embodiments.

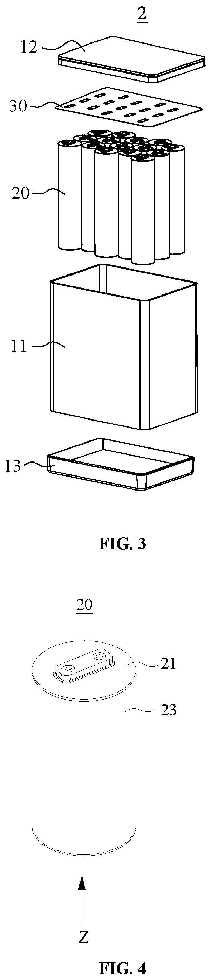

FIG. 2 is a schematic diagram of a structure of a battery 2 according to some embodiments of the present disclosure. FIG. 3 is an exploded diagram of the battery 2 in FIG. 2.

As shown in FIG. 2 and FIG. 3, the battery 2 includes a case 10 and a battery cell 20, and the battery cell 20 is accommodated in the case 10.

The case 10 is configured to accommodate the battery cell 20, and the case 10 may be of a plurality of structures. In some embodiments, the case 10 includes a case body 11, a first cover body 12, and a second cover body 13. The first cover body 12 and the second cover body 13 are respectively disposed at two ends of the case body 11. The first cover body 12 and the second cover body 13 are detachably connected to the case body 11. For example, the first cover body 12 and the second cover body 13 can be separately stuck with the case body 11 or connected by using screws. After the case body 11, the first cover body 12, and the second cover body 13 are assembled, an accommodating space is formed. The battery cell 20 is disposed in an accommodating space of the case 10.

In the battery 2, there are a plurality of battery cells 20. The plurality of battery cells 20 can be connected in series or in parallel or in series parallel. The parallel series means that the plurality of battery cells 20 are connected in series and in parallel. The plurality of battery cells 20 may be directly connected in series or in parallel or in series parallel, and then a whole of the plurality of battery cells 20 is accommodated in the case 10. Certainly, the plurality of battery cells 20 may alternatively first form battery groups in series or in parallel or in series parallel, and then a plurality of battery groups form a whole in series or in parallel or in series parallel, accommodated in the case 10.

A quantity of battery cells 20 may be set to any value according to different power requirements. The plurality of battery cells 20 can be connected in series, in parallel, or in series parallel to achieve a large capacity or power. The plurality of battery cells 20 can alternatively first form battery modules in series, in parallel, or in series parallel, and a plurality of battery modules then form a battery 2 in series, in parallel, or in series parallel. That is, the plurality of battery cells 20 can directly form the battery 2, or can first form the battery modules, and then the battery modules form the battery 2, accommodated in the case 10.

As shown in FIG. 3, the plurality of battery cells 20 are electrically connected by using a bus part 30 to reach a design voltage of the battery 2. In the battery 2, the plurality of battery cells 20 are electrically connected, specifically in connection manners such as in series, in parallel, or in series parallel (a hybrid connection of series and parallel), and the battery cells 20 are connected by using the bus part 30. The battery cell 20 includes electrode terminals, and each of the battery cells 20 includes a positive electrode terminal and a negative electrode terminal. For example, when the battery cells 20 are connected in series, a positive electrode terminal of a battery cell 20 is connected, by using the bus part 30, to a negative electrode terminal of a battery cell 20 adjacent to the foregoing battery cell 20. A structure of the bus part 30 is determined by an arrangement form of the plurality of battery cells 20 and a connection manner between the battery cells 20. A specific connection manner of the battery cells 20 is not limited in the present disclosure. The bus part 30 may be a metal conductor, such as copper, iron, aluminum, stainless steel, and aluminum alloy.

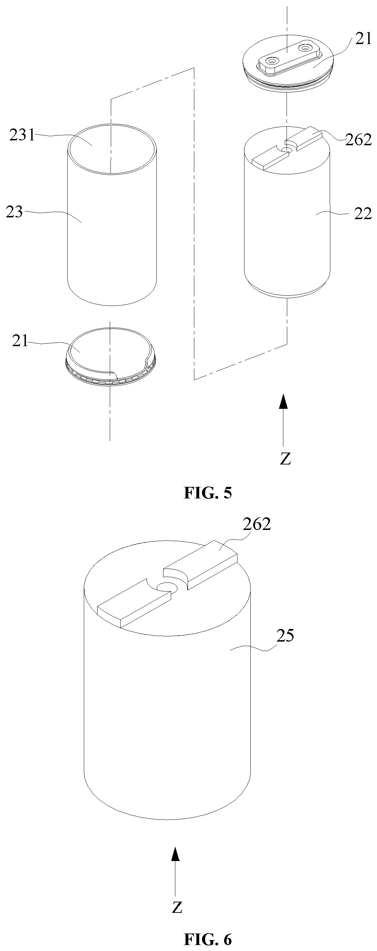

FIG. 4 is a schematic diagram of a structure of a battery cell 20 according to some embodiments of the present disclosure. FIG. 5 is an exploded diagram of the battery cell 20 in FIG. 4.

With reference to FIG. 4, the battery cells 20 refer to minimum composition units configured to form the battery 2. In some embodiments of the present disclosure, the battery cell 20 may include a lithium ion secondary battery cell, a lithium ion primary battery cell, a lithium-sulphur battery cell, a sodium lithium-ion battery cell, a sodium ion battery cell, or a magnesium ion battery cell. This is not limited in the embodiments of the present disclosure. The battery cell 20 may be cylindrical, flat, rectangular, or in another shape. For ease of description, a cylindrical battery cell 20 is used as an example in the following embodiments.

With reference to FIG. 4 and FIG. 5, the battery cell 20 includes an end cap 21, an electrode assembly 22, and a shell 23. The shell 23 is configured to accommodate the electrode assembly 22. The shell 23 may be of a plurality of shapes and sizes. Specifically, a shape of the shell 23 may be determined according to a specific shape and size of one or more electrode assemblies 22. In some embodiments, the shell 23 is a hollow cylinder. An opening 231 is disposed at an end of the shell 23, and the end cap 21 covers the opening 231 and is connected to the shell 23 to form a closed cavity for placing the electrode assembly 22. The cavity can be filled with the electrolyte. In some embodiments, an electrode terminal is disposed on the end cap 21, a tab 262 is disposed on the electrode assembly 22, and the electrode terminal can be configured to be electrically connected to the tab 262 to output electric energy of the battery cell 20. A current collector member can be correspondingly disposed at each electrode terminal, and the current collector member is located between the end cap 21 and the tab 262, so that the electrode terminal and the tab 262 can be electrically connected by using the current collector member. The end cap 21 may be further provided with another functional component, for example, a pressure relief mechanism configured to release an internal pressure when an internal pressure or a temperature of the battery cell 20 reaches a threshold. The shell 23 and the end cap 21 have a plurality of materials, such as copper, iron, aluminum, stainless steel, and aluminum alloy.

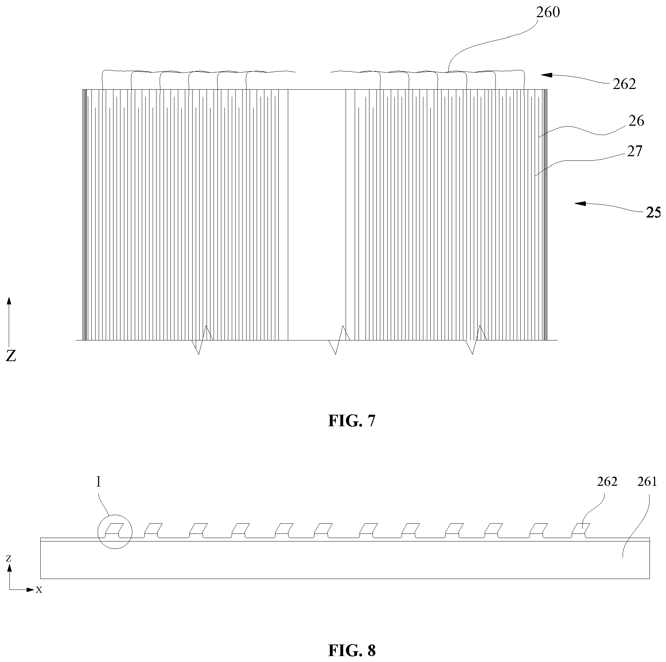

FIG. 6 is a schematic diagram of a structure of an electrode assembly 22 according to some embodiments of the present disclosure. FIG. 7 is a partially sectional view of an electrode assembly 22.

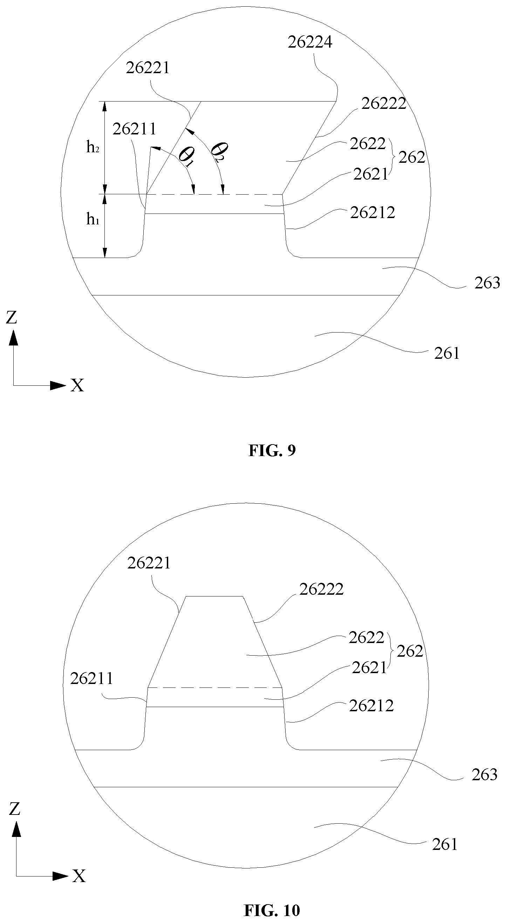

FIG. 8 is an unfolded diagram of the electrode plate 26 in FIG. 7. FIG. 9 is an enlarged view of I in FIG. 8.

As shown in FIG. 6 to FIG. 9, in some embodiments, the electrode assembly 22 is formed by winding the electrode plate 26 and the separator 27, the electrode plate 26 includes a coating region 261 and a plurality of tabs 262, the coating region 261 and the separator 27 form a main body part 25, the tabs 262 form a multi-tab structure, and the tabs 262 are located at ends of the main body part 25 along a height direction Z of the electrode assembly, and are connected to the main body part 25. The tab 262 includes a shaping region 260.

With reference to FIG. 7 and FIG. 8, the electrode assembly 22 is formed by winding the electrode plate 26 and the separator 27. When the electrode assembly 22 is wound, the electrode plate 26 and the separator 27 are first laminated and then wound together. The wound electrode assembly 22 can be cylindrical, square, or oval. An example in which the electrode assembly 22 is cylindrical is used in the following embodiments for description.

As shown in FIG. 8 and FIG. 9, in some embodiments, the electrode plate 26 includes a plurality of tabs 262, each of the tabs 262 includes a first part 2621 and a second part 2622, and along a height direction Z of the electrode plate, the second part 2622 is located outside the first part 2621, where a shape of the first part 2621 is different from a shape of the second part 2622.

In FIG. 9, a region with a height h₁ is the first part 2621, and a region with a height h₂ is the second part 2622. A dashed line in FIG. 9 does not represent an entity, and the dashed line is parallel to a length direction X of the electrode plate 26, and represents a position at which the first part 2621 and the second part 2622 are connected. The first part 2621 and the second part 2622 have different shapes, so that the first part 2621 and the second part 2622 have different types of strength and deformation capabilities. When the tab 262 is shaped, shapes of the first part 2621 and the second part 2622 can be set according to a required deformation manner, so that the first part 2621 and the second part 2622 can be shaped, and the tab 262 is shaped to obtain a required tab end face.

In order to ensure the strength of the tab 262, make the tab 262 not damaged in a shaping process, and increase a product yield rate and production efficiency, the first part 2621 is generally stronger than the second part 2622, so as to reduce a risk of damaging a root of the tab 262.

Still referring to FIG. 8, a region on the electrode plate 26 coated with an active material is the coating region 261, and a region on the electrode plate 26 that is not coated with an active material is a tab region. The tab region is die cut to form the tabs 262, and the tabs 262 are distributed at intervals. The electrode plate 26 and the separator 27 are laminated and then jointly wound into the electrode assembly 22, a part that the coating region 261 and the separator 27 are jointly wound forms the main body part 25, and the tabs 262 are wound and then laminated into a multi-tab structure.

The tabs 262 with different polarities can protrude form ends at a same side of the main body part 25 along a height direction Z (the same as the height direction Z of the electrode plate 262) of the electrode assembly 22, or can protrude from ends at two sides of the main body part 25. The tabs 262 with different polarities can be distributed symmetrically when the tabs 262 with different polarities protrude from the ends at the same side of the main body part 25, so that a center of tabs 262 with different polarities may be aligned with a center of the electrode assembly 22 as a straight line. When the tabs 262 with different polarities protrude from the ends at two sides of the main body part 25, the tabs 262 can be aligned, or can be randomly distributed at an end face of the main body part 25 along the height direction Z of the electrode assembly 22.

After the electrode plate 26 and the separator 27 are laminated and then wound together into the electrode assembly 22, the tab 262 needs to be rubbed and shaped to obtain a flat and compact tab end face, so as to improve a connection reliability between the tab 262 and a current collector component, so that the tab 262 has better overcurrent performance.

Still referring to FIG. 7, in some embodiments, predetermined deformation occurs on the second part 2622 based on the first part 2621, to form a shaping region 260 of the tab 262.

When the tab 262 is rubbed and shaped, the first part 2621 has a higher strength than the second part 2622, the second part 2622 is more prone to be deformed than the first part 2621, and deformation of the tab 262 mainly occurs on the second part 2622, so as to protect the first part 2621 from cracking. In addition, the second part 2622 that is more easily deformable can make a tab end face easy to be rubbed and unfolded, and form a flat tab end face in the shaping region 260.

In some embodiments, heights of the second parts 2622 are different. The second parts 2622 with different heights help to form a flat tab end face when the tab 262 is rubbed and unfolded.

Still referring to FIG. 9, in some embodiments, a second coating region 263 is further disposed in a region in which the first part 2621 is connected to the coating region 261, and the second coating region 263 is located on an edge of the coating region 261 and extends into the first part 2621 of the tab 262. When die cutting of the tab 262 is performed on the electrode plate 26, the second coating region 263 can prevent a burr from being generated when the die cutting is performed. When the electrode plate 26 and the separator 27 are jointly wound, a burr is prevented from piercing the separator 27, to reduce a risk that the electrode assembly 22 is short circuited. The second coating region 263 can be made of a ceramic material.

According to the invention, when the electrode plate 26 is unfolded, along a length direction X of the electrode plate 26, two sides of the first part 2621 respectively have a first side cut 26211 and a second side cut 26212 that are opposite to each other, two sides of the second part 2622 respectively have a third side cut 26221 and a fourth side cut 26222 that are opposite to each other, the first side cut 26211 and the third side cut 26221 are located on a same side and connected to each other, and the second side cut 26212 and the fourth side cut 26222 are located on a same side and connected to each other. A first angle θ₁ is formed between the first side cut 26211 and the length direction X of the electrode plate 26, a second angle θ₂ is formed between the third side cut 26221 and the length direction X of the electrode plate, and the first angle θ₁ is greater than or equal to the second angle θ₂.

A smaller second angle θ₂ is between the third side cut 26221 of the second part 2622 and the length direction X of the electrode plate. When the tabs 262 are laminated, and end faces of the tabs 262 are shaped, the second part 2622 is tilted toward a direction. When the tabs 262 are rubbed and shaped by means of rotation, the second part 2622 is tilted toward a direction consistent with a direction of rotation, so that the tabs 262 are unfolded toward a direction of rotation during a rotating and shaping process, shaping is more easily implemented, and a shaping region 260 is formed. A larger first angle θ₁ is between the first side cut 26211 of the first part 2621 located in a root region of the tab 262 and the length direction X of the electrode plate. Therefore, deformation resistance of a root of the tab 262 is increased, when the second part 2622 is rubbed and shaped, a risk of cracking at a root at which the tab 262 is connected to the main body part 25 is reduced, and a product yield rate and production efficiency are increased.

According to the invention, the first angle θ₁ ranges from 15° to 70°; according to some non-claimed embodiments, it ranges from 15° to 90°, preferably from 70° to 90°, and a larger first angle θ₁ can ensure that the first part 2621 has relatively strong deformation resistance.

Still referring to FIG. 9, in some embodiments, the third side cut 26221 and the fourth side cut 26222 are disposed in parallel, that is, an included angle between the fourth side cut 26222 and the length direction X of the electrode plate is also θ₂, and the second angle θ₂ is an acute angle less than the first angle θ₁. When the second part 2622 is rubbed and shaped, the tab 262 is more prone to fall toward a direction of the fourth side cut 26222, so as to form generally regular deformation, so that the shaping region 260 becomes flat.

FIG. 10 is a partially enlarged diagram of an electrode plate 26 according to some other embodiments of the present disclosure.

As shown in FIG. 10, in some other embodiments, the third side cut 26221 and the fourth side cut 26222 are symmetrically disposed, that is, an included angle between the fourth side cut 26222 and the length direction X of the electrode plate is 180°-θ₂, so that both the third side cut 26221 and the fourth side cut 26222 are inclined in a central direction of the tab 262. When the tab 262 is rubbed and shaped, and the tab 262 falls toward the direction of the fourth side cut 26222, because an included angle between the fourth side cut 26222 and the length direction X of the electrode plate is 180°-θ₂, and θ₂ is an acute angle, 180°-θ₂ is an obtuse angle, and the second part 2262 at a side of the fourth side cut 26222 does not have a sharp corner toward a falling direction. When the second part 2622 falls toward the direction of the fourth side cut 26222, a sharp corner of the second part 2262 is prevented from piercing into the main body part 25, which reduces a risk of damaging the main body part 25, and increases an optimization rate of the electrode assembly 22.

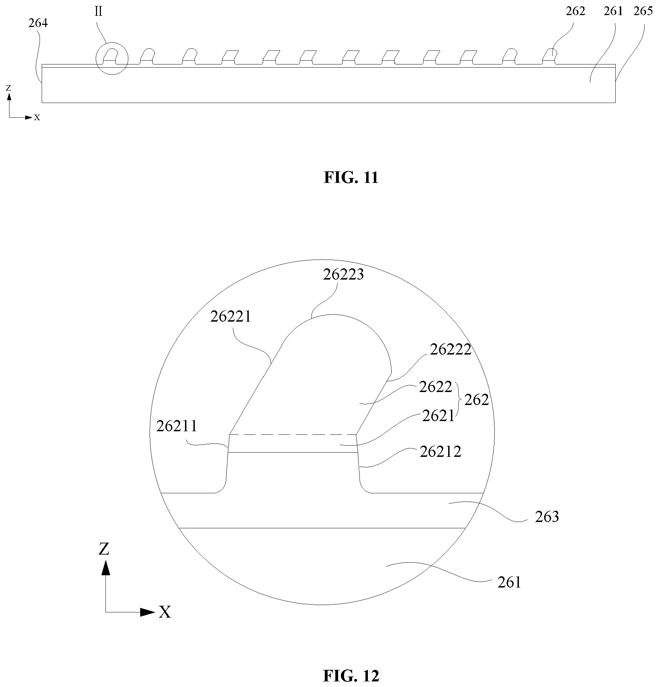

FIG. 11 is a schematic diagram of an electrode plate 26 according to some other embodiments of the present disclosure, and FIG. 12 is an enlarged diagram of II in FIG. 11.

As shown in FIG. 11 and FIG. 12, in some other embodiments, when the electrode plate 26 is unfolded, second parts 2622 of at least some of the tabs 262 include a corner cutting edge 26223, and the corner cutting edge 26223 is located at an end of the second part 2622 away from the first part 2621 and connected to the fourth side cut 26222 to remove a sharp corner of the second part 2622 on one side of the fourth side cut 26222.

To avoid that the sharp corner of the second part 2622 is bent and pierced into the main body part 25 in a shaping process, a corner cutting edge 26223 connected to the fourth side cut 26222 is disposed on the second part 2622, so that a sharp corner 26224 on one side of the fourth side cut 26222 can be removed (refer to FIG. 9), that is, the sharp corner 26224 in the falling direction of the second part 2622 is removed. When the tabs 262 are shaped, because the sharp corner 26224 on one side of the fourth side cut 26222 is removed from the corner cutting edge 26223, second parts 2262 of the tabs 262 fall toward one side of the fourth side cut 26222, so that no sharp corner 26224 is pierced into the main body part 25, thereby avoiding damage to the electrode assembly 22 and improving a product yield rate.

Still referring to FIG. 12, particularly, for the second part 2622 which has the third side cut 26221 parallel to the fourth side cut 26222, the corner cutting edge 26223 is disposed, and the sharp corner 26224 on one side of the fourth side cut 26222 is removed, so that the second part 2622 is beneficial to process and easily falls in a shaping process of the tab 262, and the sharp corner can be prevented from piercing into the main body part 25, thereby increasing a product yield rate, improving production efficiency, and reducing costs.

All the tabs 262 on the electrode plate 26 can be disposed with corner cutting edges 26223, or only some tabs 262 are disposed with the corner cutting edges 26223, and the other part of the tabs 262 is not disposed with the corner cutting edges 26223, so as to improve processing efficiency.

With reference to FIG. 11, in some embodiments, when the electrode assembly is unfolded, the corner cutting edges 26223 are disposed on the second parts 2622 on one side at a winding head end 264 of the electrode plate 26 and the second parts 2622 on one side at a winding tail end 265 of the electrode plate.

When the electrode plate 26 and the separator 27 are jointly wound into the electrode assembly 22, the electrode plate 26 starts to be wound on one side of the head end 264. The tabs 262 on one side of the head end 264 are wound around an inner ring part of the electrode assembly 22, and the tabs 262 on one side of the tail end 265 are wound around an outer ring part of the electrode assembly 22. When the tabs 262 are rubbed and shaped, the tabs 262 fall. The tabs 262 located at the inner ring part fall toward the main body part 25, and the tabs 262 located at the outer ring part fall toward the tabs 262 located at the inner ring part, and are pressed against the tabs 262 in the inner ring part. Tabs 262 in the middle part is wrapped by the tabs 262 in the outer ring part and the tabs 262 in the inner ring part. Therefore, the corner cutting edges 26223 only need to be disposed on the tabs 262 in the inner ring part and in the outer ring part. Even if the tabs 262 in the middle part have sharp corners 26224, the sharp corners 26224 do not pierce into the main body part 25. That is, only sharp corners 26224 of the tabs 262 located on one side at the head end 264 and on one side at the tail end 265 of the electrode plate 26 need to be removed, so as to reduce a risk that the sharp corners 26224 pierce into the main body part 25.

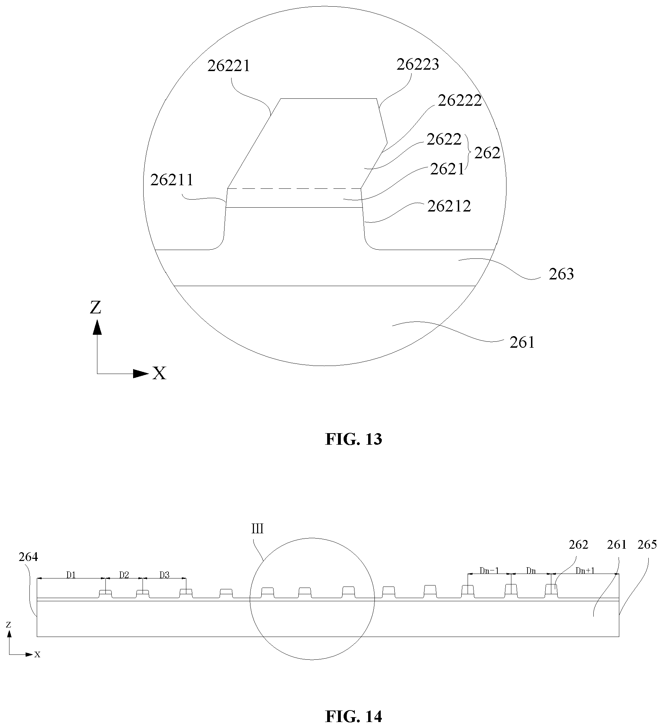

FIG. 13 is a partially enlarged diagram of an electrode plate 26 according to still some other embodiments of the present disclosure.

With reference to FIG. 12 and FIG. 13, in some embodiments, the corner cutting edge 26223 includes a bevel edge or an arc-shaped edge.

The corner cutting edge 26223 in FIG. 12 is an arc-shaped edge of a circular arc. The arc-shaped edge can be an integral arc connecting the third side cut 26221 and the fourth side cut 26222, or can be a part of an arc connecting an end of the second part 2622 away from the first part 2621 and the fourth side cut 26222. The arc-shaped edge can better remove the sharp corner 26224.

In FIG. 13, the corner cutting edge 26223 is a bevel edge, and the bevel edge directly removes the sharp corner 26224 on one side of the fourth side cut 26222, so that processing is simple and work efficiency is high.

FIG. 14 is a schematic diagram of an electrode plate 26 according to some other embodiments of the present disclosure.

As shown in FIG. 14, in some embodiments, a plurality of tabs 262 are disposed at intervals when the electrode assembly is unfolded.

After the electrode assembly 22 completes winding, the tabs 262 disposed at intervals do not form an excessively dense end face after the tabs 262 are rubbed and shaped, and help the electrode assembly 22 absorb an electrolyte.

Still referring to FIG. 8, FIG. 11, and FIG. 14, in some embodiments, when the electrode assembly is unfolded, the electrode plate 26 reserves a predetermined distance from the tab 262 along ends at two sides of the electrode plate in the length direction X, that is, the head end 264 of the electrode plate 26 reserves a predetermined distance from the first tab 262, and the tail end 265 of the electrode plate 26 reserves a predetermined distance from the last tab 262.

When the electrode plate 26 and the separator 27 are jointly wound into the electrode assembly 22, winding is started from a position at the winding head end 264 of the electrode plate 26, and a radius of a winding inner ring is very small. To arrange the tabs 262, the tabs 262 are not disposed in the inner ring of the electrode assembly 22. When the radius of the winding inner ring is large enough, and the tabs 262 with different polarities can be disposed on an end face at one side of the electrode assembly 22, the first tab 262 is disposed at the position which is used as a starting point, so that an arrangement of the tabs 262 with different polarities can be implemented.

When the tabs 262 are rubbed and unfolded, a rotating extrusion pressure is applied to an end face of the tabs 262, and each of the tabs 262 is subjected to an extrusion pressure and then deforms, and falls with a rotation direction. Deformation caused after the tabs 262 in the outer ring part are subjected to the extrusion pressure may cause some tabs 262 to extend to an outer peripheral surface of the main body part 25, thereby affecting overall dimensional accuracy of the electrode assembly 22. To prevent the tabs 262 being extruded and extended in a shaping process, the tabs 262 are not disposed in the outer ring part of the electrode assembly 22, that is, a predetermined distance is maintained between the last tab 262 and the tail end 265 of the electrode plate 26, so that a width is maintained between two of the tabs 262 at an outermost ring and the outer peripheral surface of the main body part 25. In a rubbing and shaping process, the tabs 262 do not extend to outside of the outer peripheral surface of the main body part 25, thereby ensuring dimensional accuracy of the electrode assembly 22.

In some embodiments, a predetermined distance ranges from 10 mm to 1500 mm, preferably from 300 mm to 600 mm, that is, an arrangement of each of the tabs 262 can be ensured, and a quantity of the tabs 262 can be ensured, which does not affect an overcurrent area of the electrode assembly 22.

Still referring to FIG. 14, in some embodiments, after the electrode plate 26 is wound into the electrode assembly 22, to enable a center of tabs 262 with a same polarity to be aligned with a center of the electrode assembly 22 in a straight line, a spacing between adjacent two of the tabs 262 meets the following requirements:
${D}_{n} - {D}_{n - 1} = aT \pm C$ (1)

Dₙ is a spacing between an n^{th} tab 262 and a (n-1)^{th} tab 262; Dₙ₋₁ is a spacing between the (n-1)^{th} tab 262 and the n^{th} tab 262; T is a thickness of the electrode plate 26 and the separator 27 that are laminated; *a* is a positive number; and C is an error.

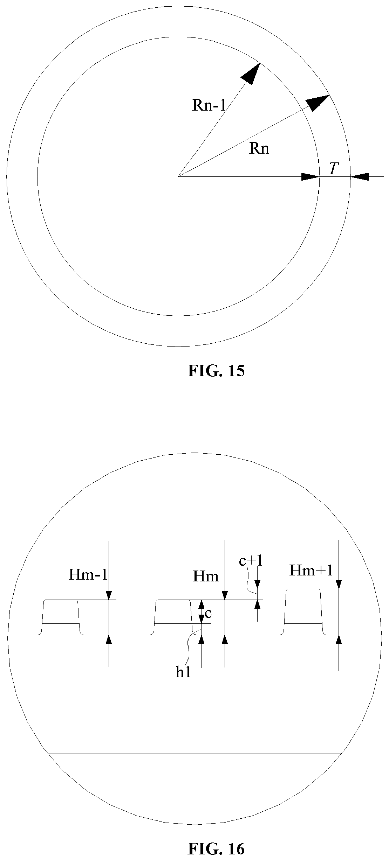

FIG. 15 is a schematic diagram of calculating a spacing between two of tabs 262 according to some embodiments of the present disclosure.

As shown in FIG. 15, for a cylindrical electrode assembly, a radius of the (n-1)^{th} tab 262 is Rₙ₋₁, a radius of the n^{th} tab 262 is Rₙ, and a radius difference between two circles is Rₙ₋₁-Rₙ. When two adjacent tabs 262 are aligned, a circumference of one circle of the electrode assembly in which the n^{th} tab 262 is located is a distance Dₙ between the n^{th} tab 262 and the (n-1)^{th} tab 262. A circumference of one circle of the electrode assembly in which the (n-1)^{th} tab 262 is located is a distance Dₙ₋₁ between the (n-1)^{th} tab 262 and a (n-2)^{th} tab 262.

It can be learned from FIG. 15 that Dₙ=2πRₙ, and Dₙ₋₁=2πRₙ₋₁, a difference between a distance Dₙ between adjacent two of the tabs 262 and a distance Dₙ₋₁ of the previous two adjacent tabs 262 is:

$\begin{matrix}{D}_{n} - {D}_{n - 1} = 2 π \left({R}_{n - 1}-{R}_{n}\right) \pm C \\ = 2 π bT \pm C\end{matrix}$ (2)

*b* is a quantity of circles of adjacent tabs 262, *T* is a thickness of the electrode plate 26 and the separator 27 that are laminated, and *bT* is equal to Rₙ₋₁-Rₙ. If there is a tab 262 at each circle, *b* is equal to 1. If there is a tab 262 spacing a plurality of circles, *b* is equal to the quantity of circles that are spaced.

It can be learned from the foregoing formulas (1) and (2) that, for a cylindrical electrode assembly, a positive number *a=*2*πb,* and for tabs 262 with a fixed quantity of spacings, *a* is a constant.

Similarly, for electrode assemblies having oval and square cross-section shapes, a distance difference Dₙ-Dₙ₋₁ thereof can be obtained by subtracting inner ring circumference and the thickness T of the electrode plate 26 and the separator 27 that are laminated from outer ring circumference, and details are not described again.

There is a manufacturing deviation in a winding process of the electrode plate 26 and the separator 27. Therefore, the distance difference Dₙ-Dₙ₋₁ allows for an error of a value C, which in some embodiments ranges preferably from 1 mm to 5 mm.

By setting the distance difference of the formula (1), the tabs 262 with a same polarity can aligns at a straight line after winding is completed, so as to ensure arrangement positions of the tabs 262 with different polarities.

Still referring to FIG. 9, in some embodiments, along a height direction Z of the electrode assembly, a height h₁ of the first part 2621 ranges from 2 mm to 8 mm, and a height h₂ of the second part 2622 ranges from 1 mm to 8 mm.

Setting of the height h₁ of the first part 2621 ensures strength of a root of the tab 262, so that it can withstand an extrusion pressure during a shaping process of the tab 262 to reduce a risk of deformation or cracking. Setting of the height h₂ of the second part 2622 enables the second part to be deformed without damaging the main body part 25.

Still referring to FIG. 14, in some embodiments, along the length direction X of the electrode plate 26, heights of the tabs 262 are gradually increased from the winding head end 264 to the winding tail end 265 of the electrode plate 26.

When the electrode plate 26 and the separator 27 are jointly wound into the electrode assembly 22, the tabs 262 on one side of the head end 264 of the electrode plate 26 are located at an inner ring of the electrode assembly 22, and the tabs 262 on one side of the tail end 265 of the electrode plate 26 are located at an outer ring of the electrode assembly 22. When the tabs 262 are rubbed and shaped, the tabs 262 at the outer ring fall toward the tabs 262 at the inner ring and press against the tabs 262 at the inner ring. To obtain a flat end face after rubbing and flattening, the heights of the tabs 262 are gradually increased from the winding head end 264 to the winding tail end 265 of the electrode plate 26, so that heights of tabs 262 at the outer ring are greater than heights of tabs 262 at the inner ring. After rubbing and shaping are performed again, an end face on which the tab 262 falls can become a flat end face.

FIG. 16 is an enlarged view of III in FIG. 14.

As shown in FIG. 14 to FIG. 16, in some embodiments, along the height direction Z of the electrode plate 26, heights of tabs 262 from the first to the m^{th} starting from the wing head end 264 of the electrode plate 26 are H1, H2 ... and Hm, and heights of tabs 262 from the (m+1)^{th} to the (m+m1)^{th} starting from the wing head end 264 of the electrode plate 26 are H(m+1), H(m+2) ... and H(m+m1). H1, H2 ... and Hm each equal h1+c, and H(m+1), H(m+2) ... and H(m+m1) each equal h1+c+c1, where cE [1 mm, 8 mm]; m∈ [1, 5]; c1∈ [0 mm, 3 mm]; and m1 ∈ [1, 5].

From the winding head end 264 to the winding tail end 265 of the electrode plate 26, the heights of the tabs 262 gradually increase. A group of adjacent tabs 262 can be set to the same height, and a group of next tabs 262 is set to the same height, which increases by a constant c1 compared with the previous group, and so on, until a height of the last tab 262 is set, so that the heights of tabs 262 gradually increase from the head end 264 to the tail end 265 of the electrode plate 26.

For example, as shown in FIG. 16, a height of the m^{th} tab 262 is Hm = h1 + c, and a height of the (m+m1)^{th} tab 262 is H (m + 1) = h1+c+c1, where m∈ [1, 5], and m1 ∈ [1, 5] represent that a quantity of each group of tabs 262 with a same height ranges from 1 to 5.

In some embodiments, a quantity of tabs 262 with a same height in each group is the same, that is, m=m1, processing is simple, and production efficiency is improved.

By means of the foregoing setting, the heights of the tabs 262 are gradually increased, according to rules, from the winding head end 264 to the winding tail end 265 of the electrode plate 26, so that a height of the tab 262 at the outer ring is greater than a height of the tab 262 at the inner ring. After rubbing and shaping are performed again, an end face on which the tab 262 falls can become a flat end face, thereby improving processing accuracy of the electrode assembly 22.

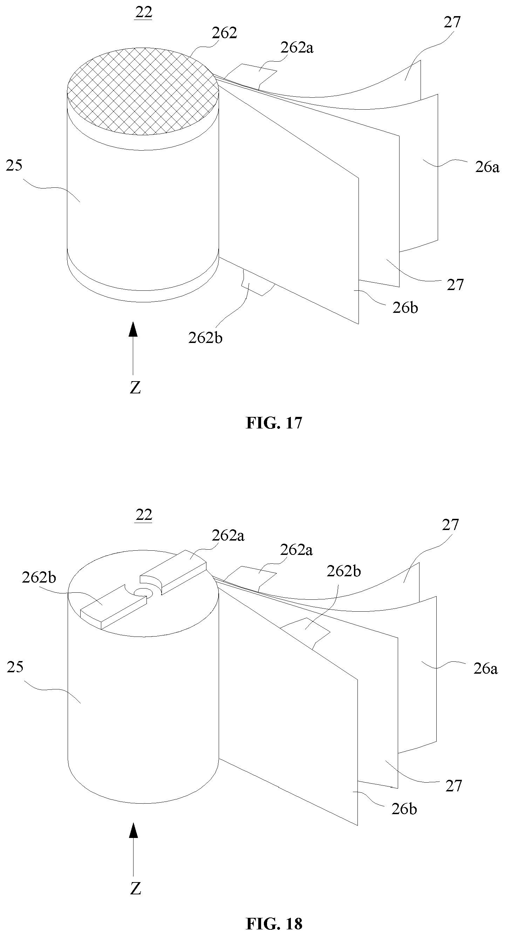

FIG. 17 is a partially unfolded diagram of an electrode assembly 22 according to some embodiments of the present disclosure.

As shown in FIG. 17, in some embodiments, the electrode assembly 22 includes an electrode plate 26, the electrode plate 26 includes a first electrode plate 26a and a second electrode plate 26b, and the first electrode plate 26a and the second electrode plate 26b have opposite polarities. The first electrode plate 26a has a plurality of first tabs 262a, and the second electrode plate 26b has a plurality of second tabs 262b. Along the height direction Z of the electrode assembly, the first tabs 262a and the second tabs 262b extend respectively from ends at two sides of the electrode assembly 22.

Tabs 262 with opposite polarities extend from ends at two sides of the electrode assembly in the height direction Z, and it is unnecessary to avoid positions of the tabs 262 with different polarities in case of being short circuited, so that layouts and spacings of the tabs 262 are not limited, and tabs 262 with a same polarity can be spread over ends of an entire main body part 25. Therefore, the electrode assembly 22 has a full-tab layout, and an overcurrent area of the electrode assembly 22 is increased.

FIG. 18 is a partially unfolded diagram of an electrode assembly 22 according to some other embodiments of the present disclosure.

As shown in FIG. 18, in some embodiments, the electrode plate 26 includes the first electrode plate 26a and the second electrode plate 26b, the first electrode plate 26a and the second electrode plate 26b have opposite polarities, the first electrode plate 26a has the plurality of first tabs 262a, the second electrode plate 26b has the plurality of second tabs 262b, and along the height direction Z of the electrode assembly, the first tabs 262a and the second tabs 262b extend respectively from ends at two side of the electrode assembly.

The first tabs 262a and the second tabs 262b with different polarities extend from ends at a same side of the main body part 25, all the first tabs 262a are aligned and overlapped, all the second tabs 262b are aligned and overlapped, and the first tabs 262a and the second tabs 262b can be disposed relative to each other at a central position of the electrode assembly 22 and are not in contact with each other to prevent a short circuit. The first tabs 262a and the second tabs 262b with different polarities extend from the ends at a same side of the main body part 25, thereby facilitating a layout of an overall structure of the electrode assembly 22.

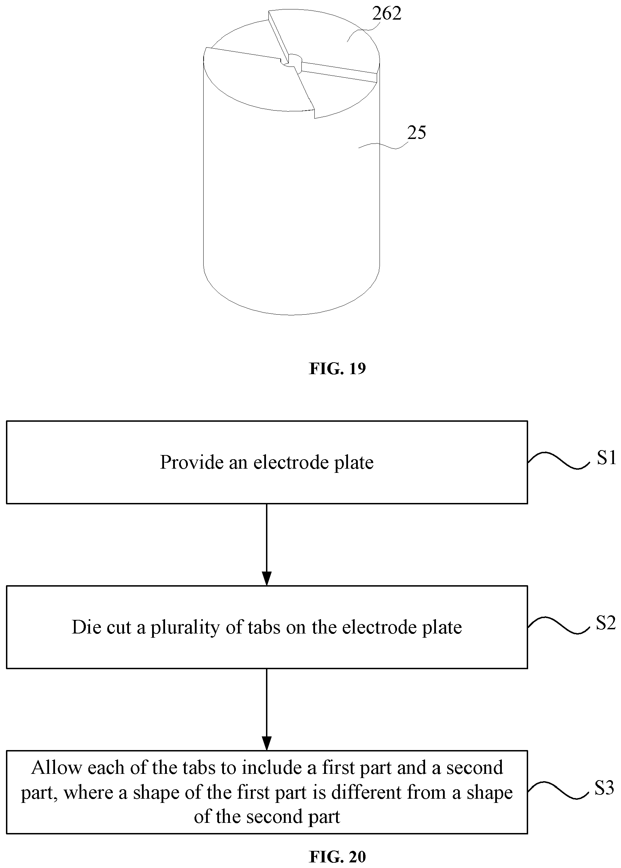

FIG. 19 is a schematic diagram of an electrode assembly 22 according to still some other embodiments of the present disclosure.

As shown in FIG. 19, for an embodiment in which the tabs 262 with different polarities at the same side of the main body part 25, widths of the tabs 262 with a same polarity gradually increase from an inner ring to an outer ring of the electrode assembly 22, and a substantially fan-shaped structure is formed on the end face of the main body part 25.

Because a radius of the electrode assembly 22 gradually increases from an inner ring to an outer ring, to meet an arrangement of the tabs 262 with different polarities, a width of the tabs 262 can be relatively small at a position at which an inner ring has relatively small radius. When a radius gradually increases from the inner ring to the outer ring, a width of the tabs 262 gradually increases with the radius, so that the tabs 262 have a larger overcurrent area, and overcurrent performance of the electrode assembly 22 is improved.

FIG. 20 is a flowchart of a manufacturing method for an electrode plate according to an embodiment of the present disclosure.

As shown in FIG. 20, a manufacturing method for an electrode plate according to an embodiment of the present disclosure includes the following steps:
Step S1, provide an electrode plate 26.
Step S2, die cut a plurality of tabs 262 on the electrode plate 26.

In step S2, the electrode plate 26 is treated, so that the electrode plate 26 includes a coating region 261 and the plurality of tabs 262.

Step S3, allow each of the tabs 262 to include a first part 2621 and a second part 2622, where along a height direction Z of the electrode plate, the second part 2622 is located outside the first part 2621, and a shape of the first part 2621 is different from a shape of the second part 2622.

In step S3, the tab 262 includes the first part 2621 and the second part 2622, and the first part 2621 is separately connected to the coating region 261 and the second part 2622 along two sides of the height direction Z of the electrode plate 26. Two sides of the first part 2621 respectively have a first side cut 26211 and a second side cut 26212 that are opposite to each other, two sides of the second part 2622 respectively have a third side cut 26221 and a fourth side cut 26222 that are opposite to each other, and the first side cut 26211 and the third side cut 26221 are located on a same side and connected to each other. A first angle θ1 is formed between the first side cut 26211 and the length direction X of the electrode plate, a second angle θ2 is formed between the third side cut 26221 and the length direction X of the electrode plate, and the first angle θ₁ is greater than or equal to the second angle θ₂.

According to an electrode plate, an electrode assembly, a battery, an electric device and a manufacturing method for an electrode plate in the present disclosure, a structure of a tab on the electrode plate is improved, so that deformation resistance of a root of the tab is improved. When the tab is rubbed and shaped, a risk of cracking at a root at which the tab is connected to a main body part is reduced, a product yield rate and production efficiency are increased, and production costs are reduced.

The foregoing descriptions are merely preferred embodiments of the present disclosure. For a person skilled in the art, various modifications and changes may be made to the present disclosure. The scope of protection of the present invention is defined by the appended claims.

## Claims

1. An electrode plate (26), comprising
a plurality of tabs (262), wherein the tabs (262) each comprise a
first part (2621) and a second part (2622), and along a height direction of the electrode plate (26), the second part (2622) is located outside the first part (2621) of the tab (262); and
a shape of the first part (2621) is different from a shape of the second part (2622),
wherein when the electrode plate (26) is unfolded, along a length direction of the electrode plate (26), two sides of the first part (2621) respectively have a first side cut (26211) and a second side cut (26212) that are opposite to each other, two sides of the second part (2622) respectively have a third side cut (26221) and a fourth side cut (26222) that are opposite to each other, the first side cut (26211) and the third side cut (26221) are located on a same side and connected to each other, and the second side cut (26212) and the fourth side cut (26222) are located on a same side and connected to each other; and
a first angle is formed between the first side cut (26211) and the length direction of the electrode plate (26), a second angle is formed between the third side cut (26221) and the length direction of the electrode plate (26), and the first angle is greater than or equal to the second angle,
**characterized in that** the first angle ranges from 15° to 70°.

2. The electrode plate (26) according to claim 1, wherein predetermined deformation occurs on the second part (2622) based on the first part (2621), to form a shaping region (260) of the tab (262).

3. The electrode plate (26) according to any one of claims 1 to 2, wherein the second parts (2622) have different heights.

4. The electrode plate (26) according to claim 1, wherein the third side cut (26221) and the fourth side cut (26222) are disposed in parallel; or the third side cut (26221) and the fourth side cut (26222) are symmetrically disposed.

5. The electrode plate (26) according to any one of claims 1 to 3, wherein when the electrode plate (26) is unfolded, a second part (2622) of at least one of the tabs (262) comprises a corner cutting edge (26223), and the corner cutting edge (26223) is located at an end of a second part (2622) away from the first part (2621) and connected to the fourth side cut (26222) to remove a sharp corner (26224) of the second part (2622) on one side of the fourth side cut (26222); optionally when the electrode plate (26) is unfolded, the second parts (2622) at a winding head end (264) of the electrode plate and the second parts (2622) at a winding tail end (265) of the electrode plate (26) are provided with the corner cutting edges (26223).

6. The electrode plate (26) according to claim 5, wherein the corner cutting edge (26223) comprises a bevel edge or an arc-shaped edge.

7. The electrode plate (26) according to any one of claims 1 to 6, wherein the tabs (262) are disposed at intervals when the electrode plate (26) is unfolded; optionally when the electrode plate (26) is unfolded, a predetermined distance is reserved between ends on two sides of the electrode plate (26) and the tab (262) along the length direction of the electrode plate (26); and optionally the predetermined distance ranges from 10 mm to 1500 mm.

8. The electrode plate (26) according to any one of claims 1 to 7, wherein a spacing between adjacent two of the tabs (262) meets: ${D}_{n} - {D}_{n - 1} = aT \pm C ,$ wherein,
Dₙ is a spacing between an n^{th} tab and a (n-1)^{th} tab;
Dₙ₋₁ is a spacing between the (n-1)^{th} tab and a (n-2)^{th} tab;
*T* is a thickness of the electrode plate (26) and a separator (27) that are laminated;
*a* is a positive number; and
C is an error; optionally along the height direction of the electrode plate (26), a height h1 of the first part (2621) ranges from 2 mm to 8 mm, and a height h2 of the second part (2622) ranges from 1 mm to 8 mm; and optionally along the length direction of the electrode plate (26), heights of the tabs (262) are gradually increased from the winding head end (264) to the winding tail end (265) of the electrode plate (26).

9. The electrode plate (26) according to any one of claims 1 to 8, wherein along the height direction of the electrode plate (26), heights of tabs (262) from a first to an m^{th} starting from the winding head end (264) of the electrode plate (26) are H1, H2 ... and Hm, heights of tabs (262) from a (m+1)^{th} to a (m+m1)^{th} starting from the winding head end (264) of the electrode plate (26) are H(m+1), H(m+2) ... and H(m+m1),
H1, H2 ... and Hm each equal h1+c, and H(m+1), H(m+2) ... and H(m+m1) each equal h1+c+c1; wherein
cE [1 mm, 8 mm]; m∈ [1,5]; c1 ∈ [0 mm, 3 mm]; and m1 ∈ [1, 5]; optionally quantities of tabs (262) with same heights in each group are the same.

10. An electrode assembly (22), comprising the electrode plate (26) according to any one of claims 1 to 9.

11. The electrode assembly (22) according to claim 10, wherein the electrode plate (26) comprises a first electrode plate (26a) and a second electrode plate (26b), the first electrode plate (26a) and the second electrode plate (26b) have opposite polarities, the first electrode plate (26a) has a plurality of first tabs (262a), the second electrode plate (26b) has a plurality of second tabs (262b), and along a height direction of the electrode assembly (22), the first tabs (262a) and the second tabs (262b) extend respectively from ends at two sides of the electrode assembly (22); or the electrode plate (26) comprises a first electrode plate (26a) and a second electrode plate (26b), the first electrode plate (26a) and the second electrode plate (26b) have opposite polarities, the first electrode plate (26a) has a plurality of first tabs (262a), the second electrode plate (26b) has a plurality of second tabs (262b), and along a height direction of the electrode assembly (22), the first tabs (262a) and the second tabs (262b) extend respectively from ends at a same side of the electrode assembly (22).

12. A battery (2), comprising the electrode assembly (22) according to any one of claim 10 or 11.

13. An electric device (1), comprising the battery (2) according to claim 12, wherein the battery (2) is configured to provide electric energy.

14. A manufacturing method for an electrode plate (26) according to any one of the claims 1-9, comprising the following steps:
providing an electrode plate (26);
die cutting a plurality of tabs (262) on the electrode plate; and
allowing each of the tabs (262) to have a first part (2621) and a second part (2622), wherein along a height direction of the electrode plate (26), the second part (2622) is located outside the first part (2621);
wherein a shape of the first part (2621) is different from a shape of the second part (2622).

## Patentansprüche

1. Elektrodenplatte (26), umfassend
eine Vielzahl von Laschen (262), wobei die Laschen (262) jeweils einen ersten Teil (2621) und einen zweiten Teil (2622) umfassen, und entlang einer Höhenrichtung der Elektrodenplatte (26) der zweite Teil (2622) außerhalb des ersten Teils (2621) der Lasche (262) angeordnet ist; und
eine Form des ersten Teils (2621) sich von einer Form des zweiten Teils (2622) unterscheidet,
wobei, wenn die Elektrodenplatte (26) entfaltet ist, entlang einer Längenrichtung der Elektrodenplatte (26) zwei Seiten des ersten Teils (2621) jeweils einen ersten seitlichen Einschnitt (26211) und einen zweiten seitlichen Einschnitt (26212) aufweisen, die einander gegenüberliegen, zwei Seiten des zweiten Teils (2622) jeweils einen dritten seitlichen Einschnitt (26221) und einen vierten seitlichen Einschnitt (26222) aufweisen, die einander gegenüberliegen, der erste seitliche Einschnitt (26211) und der dritte seitliche Einschnitt (26221) auf einer gleichen Seite angeordnet und miteinander verbunden sind, und der zweite seitliche Einschnitt (26212) und der vierte seitliche Einschnitt (26222) auf einer gleichen Seite angeordnet und miteinander verbunden sind; und
ein erster Winkel zwischen dem ersten seitlichen Einschnitt (26211) und der Längenrichtung der Elektrodenplatte (26) gebildet ist, ein zweiter Winkel zwischen dem dritten seitlichen Einschnitt (26221) und der Längenrichtung der Elektrodenplatte (26) gebildet ist, und der erste Winkel größer als oder gleich dem zweiten Winkel ist,
**dadurch gekennzeichnet, dass** der erste Winkel im Bereich von 15° bis 70° liegt.

2. Elektrodenplatte (26) nach Anspruch 1, wobei eine vorbestimmte Verformung an dem zweiten Teil (2622) basierend auf dem ersten Teil (2621) auftritt, um einen Formgebungsbereich (260) der Lasche (262) zu bilden.

3. Elektrodenplatte (26) nach einem der Ansprüche 1 bis 2, wobei die zweiten Teile (2622) unterschiedliche Höhen aufweisen.

4. Elektrodenplatte (26) nach Anspruch 1, wobei der dritte seitliche Einschnitt (26221) und der vierte seitliche Einschnitt (26222) parallel angeordnet sind; oder der dritte seitliche Einschnitt (26221) und der vierte seitliche Einschnitt (26222) symmetrisch angeordnet sind.

5. Elektrodenplatte (26) nach einem der Ansprüche 1 bis 3, wobei, wenn die Elektrodenplatte (26) entfaltet ist, ein zweiter Teil (2622) von mindestens einer der Laschen (262) eine Eckenschnittkante (26223) umfasst, und die Eckenschnittkante (26223) an einem Ende eines zweiten Teils (2622) entfernt von dem ersten Teil (2621) angeordnet und mit dem vierten seitlichen Einschnitt (26222) verbunden ist, um eine scharfe Ecke (26224) des zweiten Teils (2622) auf einer Seite des vierten seitlichen Einschnitts (26222) zu entfernen; gegebenenfalls, wenn die Elektrodenplatte (26) entfaltet ist, die zweiten Teile (2622) an einem Wickelkopfende (264) der Elektrodenplatte und die zweiten Teile (2622) an einem Wickelschwanzende (265) der Elektrodenplatte (26) mit den Eckenschnittkanten (26223) versehen sind.

6. Elektrodenplatte (26) nach Anspruch 5, wobei die Eckenschnittkante (26223) eine abgeschrägte Kante oder eine bogenförmige Kante umfasst.

7. Elektrodenplatte (26) nach einem der Ansprüche 1 bis 6, wobei die Laschen (262) in Abständen angeordnet sind, wenn die Elektrodenplatte (26) entfaltet ist; gegebenenfalls, wenn die Elektrodenplatte (26) entfaltet ist, ein vorbestimmter Abstand zwischen Enden auf zwei Seiten der Elektrodenplatte (26) und der Lasche (262) entlang der Längenrichtung der Elektrodenplatte (26) vorgesehen ist; und gegebenenfalls der vorbestimmte Abstand im Bereich von 10 mm bis 1500 mm liegt.

8. Elektrodenplatte (26) nach einem der Ansprüche 1 bis 7, wobei eine Beabstandung zwischen zwei benachbarten der Laschen (262) erfüllt: ${D}_{n} - {D}_{n - 1} = aT \pm C ,$ wobei,
Dₙ eine Beabstandung zwischen einer n-ten Lasche und einer (n-1)-ten Lasche ist;
Dₙ₋₁ eine Beabstandung zwischen der (n-1)-ten Lasche und einer (n-2)-ten Lasche ist;
*T* eine Dicke der Elektrodenplatte (26) und eines Separators (27) ist, die laminiert sind;
*a* eine positive Zahl ist; und
C ein Fehler ist; gegebenenfalls entlang der Höhenrichtung der Elektrodenplatte (26) eine Höhe h1 des ersten Teils (2621) im Bereich von 2 mm bis 8 mm liegt, und eine Höhe h2 des zweiten Teils (2622) im Bereich von 1 mm bis 8 mm liegt; und gegebenenfalls entlang der Längenrichtung der Elektrodenplatte (26) Höhen der Laschen (262) vom Wickelkopfende (264) zum Wickelschwanzende (265) der Elektrodenplatte (26) allmählich zunehmen.

9. Elektrodenplatte (26) nach einem der Ansprüche 1 bis 8, wobei entlang der Höhenrichtung der Elektrodenplatte (26) Höhen von Laschen (262) von einer ersten bis zu einer m-ten, beginnend am Wickelkopfende (264) der Elektrodenplatte (26), H1, H2 ... und Hm sind, Höhen von Laschen (262) von einer (m+1)-ten bis zu einer (m+m1)-ten, beginnend am Wickelkopfende (264) der Elektrodenplatte (26), H(m+1), H(m+2) ... und H(m+m1) sind,
H1, H2 ... und Hm jeweils gleich h1+c sind, und H(m+1), H(m+2) ... und H(m+m1) jeweils gleich h1+c+c1 sind; wobei
c∈ [1 mm, 8 mm]; m∈ [1, 5]; c1∈ [0 mm, 3 mm]; und m1∈ [1, 5];
gegebenenfalls Anzahlen von Laschen (262) mit gleichen Höhen in jeder Gruppe gleich sind.

10. Elektrodenanordnung (22), umfassend die Elektrodenplatte (26) nach einem der Ansprüche 1 bis 9.

11. Elektrodenanordnung (22) nach Anspruch 10, wobei die Elektrodenplatte (26) eine erste Elektrodenplatte (26a) und eine zweite Elektrodenplatte (26b) umfasst, die erste Elektrodenplatte (26a) und die zweite Elektrodenplatte (26b) entgegengesetzte Polaritäten aufweisen, die erste Elektrodenplatte (26a) eine Vielzahl von ersten Laschen (262a) aufweist, die zweite Elektrodenplatte (26b) eine Vielzahl von zweiten Laschen (262b) aufweist, und entlang einer Höhenrichtung der Elektrodenanordnung (22) sich die ersten Laschen (262a) und die zweiten Laschen (262b) jeweils von Enden an zwei Seiten der Elektrodenanordnung (22) erstrecken; oder die Elektrodenplatte (26) eine erste Elektrodenplatte (26a) und eine zweite Elektrodenplatte (26b) umfasst, die erste Elektrodenplatte (26a) und die zweite Elektrodenplatte (26b) entgegengesetzte Polaritäten aufweisen, die erste Elektrodenplatte (26a) eine Vielzahl von ersten Laschen (262a) aufweist, die zweite Elektrodenplatte (26b) eine Vielzahl von zweiten Laschen (262b) aufweist, und entlang einer Höhenrichtung der Elektrodenanordnung (22) sich die ersten Laschen (262a) und die zweiten Laschen (262b) jeweils von Enden an einer gleichen Seite der Elektrodenanordnung (22) erstrecken.

12. Batterie (2), umfassend die Elektrodenanordnung (22) nach einem der Ansprüche 10 oder 11.

13. Elektrische Vorrichtung (1), umfassend die Batterie (2) nach Anspruch 12, wobei die Batterie (2) konfiguriert ist, um elektrische Energie bereitzustellen.

14. Herstellungsverfahren für eine Elektrodenplatte (26) nach einem der Ansprüche 1-9, umfassend die folgenden Schritte:
Bereitstellen einer Elektrodenplatte (26);
Stanzen einer Vielzahl von Laschen (262) auf der Elektrodenplatte; und
Bewirken, dass jede der Laschen (262) einen ersten Teil (2621) und einen zweiten Teil (2622) aufweist, wobei entlang einer Höhenrichtung der Elektrodenplatte (26) der zweite Teil (2622) außerhalb des ersten Teils (2621) angeordnet ist;
wobei eine Form des ersten Teils (2621) sich von einer Form des zweiten Teils (2622) unterscheidet.

## Revendications

1. Plaque d'électrode (26), comprenant
une pluralité de languettes (262), dans laquelle les languettes (262) comprennent chacune une première partie (2621) et une seconde partie (2622), et le long d'une direction de la hauteur de la plaque d'électrode (26), la seconde partie (2622) est située à l'extérieur de la première partie (2621) de la languette (262) ; et
une forme de la première partie (2621) est différente d'une forme de la seconde partie (2622),
dans laquelle, lorsque la plaque d'électrode (26) est dépliée, le long d'une direction de la longueur de la plaque d'électrode (26), deux côtés de la première partie (2621) présentent respectivement une première découpe latérale (26211) et une deuxième découpe latérale (26212) qui sont opposées l'une à l'autre, deux côtés de la seconde partie (2622) présentent respectivement une troisième découpe latérale (26221) et une quatrième découpe latérale (26222) qui sont opposées l'une à l'autre, la première découpe latérale (26211) et la troisième découpe latérale (26221) sont situées sur un même côté et raccordées l'une à l'autre, et la deuxième découpe latérale (26212) et la quatrième découpe latérale (26222) sont situées sur un même côté et raccordées l'une à l'autre ; et
un premier angle est formé entre la première découpe latérale (26211) et la direction de la longueur de la plaque d'électrode (26), un second angle est formé entre la troisième découpe latérale (26221) et la direction de la longueur de la plaque d'électrode (26), et le premier angle est supérieur ou égal au second angle,
**caractérisé en ce que** le premier angle est dans la plage de 15° à 70°.

2. Plaque d'électrode (26) selon la revendication 1, dans laquelle une déformation prédéterminée se produit sur la seconde partie (2622) sur la base de la première partie (2621), pour former une région de mise en forme (260) de la languette (262).

3. Plaque d'électrode (26) selon l'une quelconque des revendications 1 à 2, dans laquelle les secondes parties (2622) ont des hauteurs différentes.

4. Plaque d'électrode (26) selon la revendication 1, dans laquelle la troisième découpe latérale (26221) et la quatrième découpe latérale (26222) sont disposées en parallèle ; ou la troisième découpe latérale (26221) et la quatrième découpe latérale (26222) sont disposées symétriquement.

5. Plaque d'électrode (26) selon l'une quelconque des revendications 1 à 3, dans laquelle, lorsque la plaque d'électrode (26) est dépliée, une seconde partie (2622) d'au moins une des languettes (262) comprend une arête de coupe de coin (26223), et l'arête de coupe de coin (26223) est située à une extrémité d'une seconde partie (2622) à distance de la première partie (2621) et raccordée à la quatrième découpe latérale (26222) pour enlever un coin vif (26224) de la seconde partie (2622) sur un côté de la quatrième découpe latérale (26222) ; éventuellement, lorsque la plaque d'électrode (26) est dépliée, les secondes parties (2622) à une extrémité de tête d'enroulement (264) de la plaque d'électrode et les secondes parties (2622) à une extrémité de queue d'enroulement (265) de la plaque d'électrode (26) sont pourvues des arêtes de coupe de coin (26223).

6. Plaque d'électrode (26) selon la revendication 5, dans laquelle l'arête de coupe de coin (26223) comprend une arête en biseau ou une arête de forme arquée.

7. Plaque d'électrode (26) selon l'une quelconque des revendications 1 à 6, dans laquelle les languettes (262) sont disposées à des intervalles lorsque la plaque d'électrode (26) est dépliée ; éventuellement, lorsque la plaque d'électrode (26) est dépliée, une distance prédéterminée est réservée entre des extrémités sur deux côtés de la plaque d'électrode (26) et la languette (262) le long de la direction de la longueur de la plaque d'électrode (26) ; et éventuellement la distance prédéterminée est dans la plage de 10 mm à 1500 mm.

8. Plaque d'électrode (26) selon l'une quelconque des revendications 1 à 7, dans laquelle un espacement entre deux languettes adjacentes parmi les languettes (262) satisfait à : ${D}_{n} - {D}_{n - 1} = aT \pm C ,$ où,
Dₙ est un espacement entre une n-ième languette et une (n-1)-ième languette;
Dₙ₋₁ est un espacement entre la (n-1)-ième languette et une (n-2)-ième languette ;
*T* est une épaisseur de la plaque d'électrode (26) et d'un séparateur (27) qui sont stratifiés ;
*a* est un nombre positif ; et
C est une erreur ; éventuellement, le long de la direction de la hauteur de la plaque d'électrode (26), une hauteur h1 de la première partie (2621) est dans la plage de 2 mm à 8 mm, et une hauteur h2 de la seconde partie (2622) est dans la plage de 1 mm à 8 mm ; et éventuellement, le long de la direction de la longueur de la plaque d'électrode (26), des hauteurs des languettes (262) sont progressivement augmentées de l'extrémité de tête d'enroulement (264) à l'extrémité de queue d'enroulement (265) de la plaque d'électrode (26).

9. Plaque d'électrode (26) selon l'une quelconque des revendications 1 à 8, dans laquelle, le long de la direction de la hauteur de la plaque d'électrode (26), des hauteurs de languettes (262) d'une première à une m-ième en partant de l'extrémité de tête d'enroulement (264) de la plaque d'électrode (26) sont H1, H2 ... et Hm, des hauteurs de languettes (262) d'une (m+1)-ième à une (m+m1)-ième en partant de l'extrémité de tête d'enroulement (264) de la plaque d'électrode (26) sont H(m+1), H(m+2) ... et H(m+m1),
H1, H2 ... et Hm sont chacune égales à h1+c, et H(m+1), H(m+2) ... et H(m+m1) sont chacune égales à h1+c+c1 ; où
c∈ [1 mm, 8 mm] ; m∈ [1, 5] ; c1∈ [0 mm, 3 mm] ; et m1∈ [1, 5] ;
éventuellement des quantités de languettes (262) avec des hauteurs identiques dans chaque groupe sont les mêmes.

10. Ensemble d'électrodes (22), comprenant la plaque d'électrode (26) selon l'une quelconque des revendications 1 à 9.

11. Ensemble d'électrodes (22) selon la revendication 10, dans lequel la plaque d'électrode (26) comprend une première plaque d'électrode (26a) et une seconde plaque d'électrode (26b), la première plaque d'électrode (26a) et la seconde plaque d'électrode (26b) ont des polarités opposées, la première plaque d'électrode (26a) présente une pluralité de premières languettes (262a), la seconde plaque d'électrode (26b) présente une pluralité de secondes languettes (262b), et le long d'une direction de la hauteur de l'ensemble d'électrodes (22), les premières languettes (262a) et les secondes languettes (262b) s'étendent respectivement depuis des extrémités au niveau de deux côtés de l'ensemble d'électrodes (22) ; ou la plaque d'électrode (26) comprend une première plaque d'électrode (26a) et une seconde plaque d'électrode (26b), la première plaque d'électrode (26a) et la seconde plaque d'électrode (26b) ont des polarités opposées, la première plaque d'électrode (26a) présente une pluralité de premières languettes (262a), la seconde plaque d'électrode (26b) présente une pluralité de secondes languettes (262b), et le long d'une direction de la hauteur de l'ensemble d'électrodes (22), les premières languettes (262a) et les secondes languettes (262b) s'étendent respectivement depuis des extrémités au niveau d'un même côté de l'ensemble d'électrodes (22).

12. Batterie (2), comprenant l'ensemble d'électrodes (22) selon l'une quelconque de la revendication 10 ou 11.

13. Dispositif électrique (1), comprenant la batterie (2) selon la revendication 12, dans lequel la batterie (2) est configurée pour fournir de l'énergie électrique.

14. Procédé de fabrication pour une plaque d'électrode (26) selon l'une quelconque des revendications 1 à 9, comprenant les étapes suivantes :
la fourniture d'une plaque d'électrode (26) ;
la découpe à l'emporte-pièce d'une pluralité de languettes (262) sur la plaque d'électrode ; et
le fait de permettre à chacune des languettes (262) d'avoir une première partie (2621) et une seconde partie (2622), dans lequel le long d'une direction de la hauteur de la plaque d'électrode (26), la seconde partie (2622) est située à l'extérieur de la première partie (2621) ;
dans lequel une forme de la première partie (2621) est différente d'une forme de la seconde partie (2622).
